# EUROPÄISCHE PATENTSCHRIFT

(11) **EP 1 876 368 B1**
(45) Veröffentlichungstag und Bekanntmachung des Hinweises auf die Patenterteilung: **15.12.2010**
(21) Anmeldenummer: 06014189.2
(22) Anmeldetag: 08.07.2006
(51) Int. Cl.: F16D 13/64

(54) **Verfahren zur Herstellung der Kupplungsscheibe einer Kupplungseinrichtung und Kupplungsscheibe**
Method of manufacturing a clutch disc for a clutch and a clutch disc
Procédé de fabrication d'une disque d'embrayage et une disque d'embrayage

(43) Veröffentlichungstag der Anmeldung: 09.01.2008
(73) Patentinhaber: ZF Friedrichshafen AG, 88046 Friedrichshafen (DE)
(72) Erfinder: Radic, Anita, 97422 Schweinfurt (DE)

(56) Entgegenhaltungen:
- DE-A- 3 619 894
- DE-A1- 10 002 261
- DE-A1- 19 634 534
- US-A- 5 810 969

## Beschreibung

Die Erfindung betrifft ein Verfahren zur Herstellung der Kupplungsscheibe einer Kupplungseinrichtung, insbesondere einer Kraftfahrzeugkupplungseinrichtung, die mindestens einen Reibbelag aufweist, der auf einer der Seiten einer Belagfeder festgelegt ist. Des weiteren betrifft die Erfindung eine Kupplungsscheibe.

Aus der DE 36 19 894 C2 und aus der US 2,547,427 ist eine Kraftfahrzeugkupplungseinrichtung bekannt, bei der eine Kupplungsscheibe beiderseits mit einem Reibbelag versehen ist. Dabei wird die Kupplungsscheibe zwischen einer Anpressplatte und einem Schwungrad angeordnet. Durch Beaufschlagung der Anpressplatte mit einer axial wirkenden Kraft wird Reibschluss zwischen Anpressplatte, Kupplungsscheibe und Schwungrad hergestellt, wodurch ein Drehmoment übertragen werden kann.

Die Festlegung der Reibbeläge an der Kupplungsscheibe erfolgt dadurch, dass eine Anzahl Nieten sowohl den Reibbelag als auch die Belagfeder, die den Kupplungsscheibengrundkörper bildet, durchsetzen. Hierdurch wird Kraft- und Formschluss zwischen diesen beiden Bauteilen hergestellt.

In nachteiliger Weise kann es im Betrieb der Kupplungsscheibe zu einer Lockerung der aufgenieteten Reibbeläge auf der Belagfeder kommen, was zum Ausfall der Kupplungseinrichtung führen kann. Durch den Lastwechsel kann es bei niedrigem Reibwert zwischen der Rückseite des Reibbelags und der Belagfeder bzw. bei nicht ausreichender Vernietung zu einem "Lösen" des Belags kommen, so dass dieser unter dem Niet verrutschen kann. Hierdurch kommt es zu Schwierigkeiten bei der Drehmomentübertragung. Das wiederum führt zum Ausfall der Scheibe bzw. der gesamten Kupplung.

Es ist daher bekannt, entsprechend verstärkte Nieten einzusetzen, um ein Lockern zu verhindern. Allerdings sind der Größe der zum Einsatz kommenden Nieten Grenzen gesetzt. Sofern nämlich Nieten zur Festlegung der Reibbeläge an der Belagfeder zum Einsatz kommen, ist die Nutztiefe des Reibbelags begrenzt, da die Kupplungsscheibe maximal bis zu dem Zeitpunkt benutzbar ist, bis zu dem der Reibbelag auf Höhe der Nieten verschlissen ist. Daher ist es nachteilig, große Nieten einzusetzen, wie es zur Verhinderung des Lösens zweckdienlich wäre. Ferner stellt das Vernieten einen relativ aufwändigen Arbeitsgang dar, der entsprechend teuer ist.

Ferner ist es bekannt geworden, die Belagfedern zu phosphatieren; allerdings dient diese Maßnahme eher dem Korrosionsschutz. Ferner kann es dadurch zu einer Wasserstoffversprödung des Materials der Belagfeder kommen.

Die Festlegung des Reibbelags am Kupplungsscheibengrundkörper kann gemäß der US 6,102,184 auch durch Festkleben des Reibbelags erfolgen. Zum schnellen Aushärten des zum Einsatz kommenden Klebers schlägt die EP 0 781 937 B1 ein spezielles Klebeverfahren vor. Die DE 100 02 261 A1 offenbart zur Verhinderung des Absinkens des Reibwertes eine Beschichtung der Oberfläche des mit einem Reibpartner in Verbindung stehenden Reibbelags der Kupplungsvorrichtung.

DE-A-196 34 534 offenbart ein gattungsgemäßes Verfahren, wobei ein Teil der der Belagfeder zugewandeten Seite des Reibbelags vor der Verbindung der Belagfeder mit den Reibbelag mit einer Oberflächenbeschichtung versehen wird.

Im Lichte der vorbekannten Lösungen liegt der Erfindung daher die **Aufgabe** zugrunde, ein Verfahren zur Herstellung der Kupplungsscheibe einer Kupplungseinrichtung sowie eine Kupplungsscheibe zu schaffen, mit dem bzw. mit der die vorstehenden Nachteile überwunden werden können. Es soll insbesondere ein festes Anliegen des Reibbelags an der Belagfeder unter allen Betriebsumständen sichergestellt werden.

Die **Lösung** dieser Aufgabe durch die Erfindung erfolgt verfahrensgemäß durch die Merkmale des Anspruchs 1.

Im Unterschied zu vorbekannten Lösungen wird also eine Oberflächenbeschichtung für diejenigen Bauteile an der Stelle vorgesehen, die im späteren Betrieb der Kupplungsvorrichtung im festen Kontakt stehen und für die keine Relativbewegung vorgesehen ist. Namentlich wird die Kontaktfläche zwischen Belagfeder und Reibbelag beschichtet, bevor die beiden Teile miteinander vernietet werden.

Dabei wird vorzugsweise ausschließlich die Kontaktfläche zwischen Reibbelag und Belagfeder der Oberflächenbeschichtung unterzogen.

Fortbildungsgemäß ist die Oberflächenbeschichtung eine Lackbeschichtung.

Zur Aushärtung der auf die Belagfeder und/oder auf den Reibbelag aufgebrachten Oberflächenschicht wird diese weiterbildungsgemäß mit einer Strahlungsquelle bestrahlt. Dabei erfolgt die Bestrahlung mit Vorteil mit einer Lichtquelle, insbesondere mit einer UV-Lichtquelle. Dafür kommt bevorzugt eine Quecksilberdampflampe zum Einsatz.

Gemäß einer weiteren Fortbildung ist vorgesehen, dass das Material der Oberflächenschicht in flüssigem, in gelartigem oder in festem Zustand, insbesondere in pulverförmigem Zustand, auf die zu beschichtenden Teile aufgebracht wird. Das Aufbringen des Materials der Oberflächenschicht auf die zu beschichtenden Teile kann dabei durch ein Walzverfahren, durch ein Tauchverfahren oder durch ein Spritzverfahren erfolgen.

Die erfindungsgemäße Kupplungsscheibe für eine Kupplungseinrichtung, insbesondere einer Kraftfahrzeugkupplungseinrichtung, wird in Anspruch 10 definiert.

Die Oberflächenbeschichtung ist insbesondere eine Lackbeschichtung.

Das Material der Oberflächenschicht ist mit Vorteil ein optisch aushärtbares Substrat. Insbesondere ist das Material der Oberflächenschicht ein lösungsmittelfreies Substrat. Es kann vor seinem Auftrag flüssig, gelartig oder fest, insbesondere pulverförmig, sein. Besonders bewährt hat sich ein Material, dessen Basis Acrylat ist.

Um den Reibwert des Beschichtungsmaterials zu erhöhen, kann weiter vorgesehen werden, dass das Grundmaterial der Oberflächenschicht mindestens einen weiteren Bestandteil aufweist. Hierbei ist vorzugsweise daran gedacht, dass der mindestens eine weitere Bestandteil ein anorganisches Polymer oder ein organisches Polymer oder eine Mischung aus diesen ist. Der mindestens eine weitere Bestandteil kann ein Gummi oder ein Elastomer sein. Insbesondere kann der mindestens eine weitere Bestandteil ein abrasives Material sein, vorzugsweise Quarz, Kieselgel, Keramik oder eine Mischung aus mindestens zwei der genannten Komponenten. Die Verwendung organischer Polymere ist sehr vorteilhaft, weil diese Materialien mit den optisch aushärtenden Substraten sehr gut mischbar sind.

Durch das vorgeschlagene Verfahren und die zugehörige Kupplungsscheibe wird erreicht, dass bei allen Last- und Betriebsbedingungen ein festes Anliegen des Reibbelags an der Belagfeder sichergestellt ist; dies wird erreicht durch eine Erhöhung des Reibwertes zwischen den beiden Bauteilen. Der Aufwand für das Vernieten kann reduziert werden, was die Kosten in gleicher Weise positiv beeinflusst. Weiterhin ergibt sich ein Korrosionsschutz für die Belagfeder.

Für das Vernieten des Reibbelags mit der Belagfeder können schließlich kleinere Nieten eingesetzt werden, was in positiver Weise zur Folge hat, dass eine bessere Ausnutzung des Reibbelags und dessen Verschleißvolumens möglich wird. Insofern kann auch die Belagdicke vermindert werden.

In der Zeichnung ist ein Ausführungsbeispiel der Erfindung dargestellt. Es zeigen:

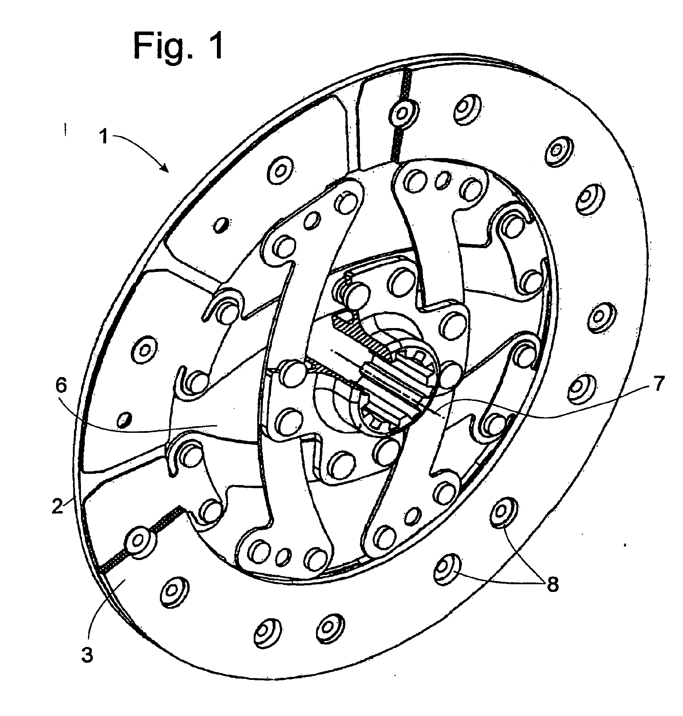

- Fig. 1: in perspektivischer Ansicht die Kupplungsscheibe einer Kupplungsvorrichtung,
- Fig. 2: in perspektivischer Ansicht einen Teil der Belagfeder der Kupplungsscheibe und
- Fig. 3: in einem Radialschnitt die Kupplungsscheibe nach Fig. 1.

In den Figuren ist eine Kupplungsscheibe 1 dargestellt, die in einer Kraftfahrzeugkupplungseinrichtung zum Einsatz kommt. Dabei rotiert die Kupplungsscheibe 1 um die Drehachse 7. Nicht dargestellt sind beidseitig der Kupplungsscheibe angeordnete Bauteile, nämlich einerseits die Anpressplatte und andererseits das Schwungrad. Durch Beaufschlagung der Anpressplatte mit einer axial wirkenden Kraft wird Reibschluss zwischen Anpressplatte, Kupplungsscheibe 1 und Schwungrad hergestellt, wie es der allgemeinen Bauform einer Kupplungseinrichtung dieser Art entspricht.

Die Kupplungsscheibe 1 weist eine Belagfeder 6 auf, die beidseitig mit Reibbelägen 2 bzw. 3 versehen ist. Die Reibbeläge 2, 3 müssen möglichst fest und unverschieblich an der Belagfeder 6 angebracht werden, damit die Kupplungsvorrichtung ihren Zweck erfüllen kann. Hierzu sind die Reibbeläge 2, 3 jeweils an einer Seite 4 bzw. 5 der Belagfeder 6 angeordnet und dort mit Nieten 8 befestigt.

Damit es im Betrieb der Kupplungsvorrichtung nicht zu einem "Lösen" bzw. Verrutschen zwischen dem Reibbelag 2, 3 und der Belagfeder 6 kommt, wurde die Belagfeder 6 vor dem Festnieten der Reibbeläge 2, 3 vorbearbeitet. Es wurde auf die Belagfeder 6 eine Oberflächenschicht auf der Seite aufgebracht, an der im späteren Betrieb der Reibbelag 2, 3. anliegt.

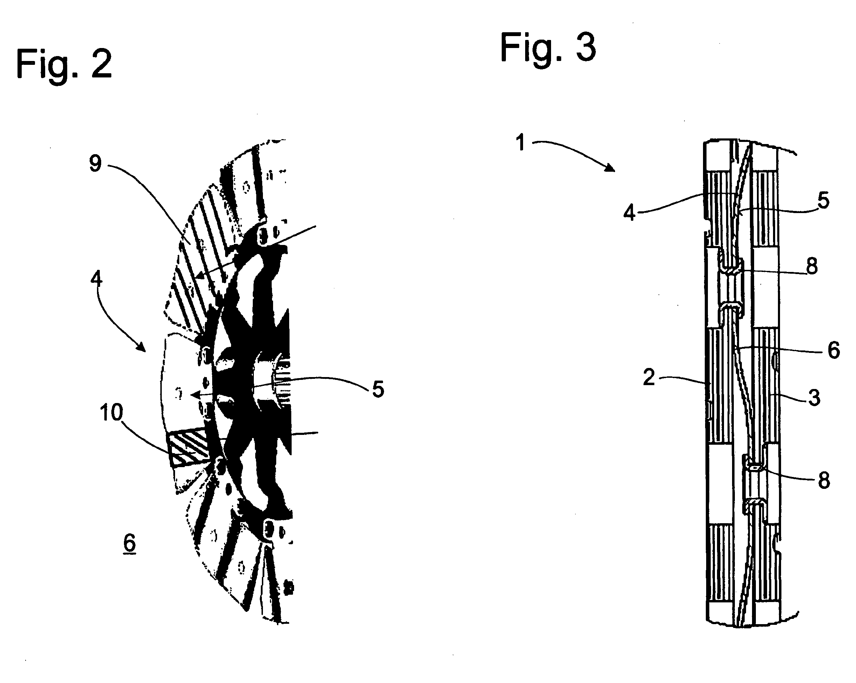

Dabei ist es nicht notwendig, die gesamte Seite 4 bzw. 5 (s. Fig. 2 und 3) der Belagfeder 6 zu beschichten. Es reicht aus, zumindest denjenigen Bereich zu beschichten, der später Kontakt zum Reibbelag 2, 3 hat. In Fig. 2 sind hierzu exemplarisch zwei Flächen markiert. Die obere schraffierte Fläche 9 (erste beschichtete Fläche) stellt die gesamte Fläche der Belagfeder 6 dar, d. h. in diesem Falle ist also nicht nur die Kontaktfläche zum Reibbelag 2, 3, sondern die gesamte Belagfeder 6 beschichtet. Indessen deutet die untere schraffierte Fläche 10 (zweite beschichtete Fläche) als alternative Lösung an, dass nur in diesem Bereich Kontakt mit dem Reibbelag 2, 3 vorliegt; die Belagfeder 6 ist also nur partiell in dem späteren Kontaktbereich zum Reibbelag 2, 3 beschichtet.

Zwecks Beschichtung der gesamten oder eines Teils der Belagfeder 6 wird beispielsweise ein Substrat auf Acrylatbasis auf die Belagfeder 6 in geeigneter Weise aufgetragen. Die hierfür nötigen Verfahrenstechniken sind allgemein bekannt, z. B. Walz-, Tauch- und Spritzverfahren. Das Substrat ist dabei lösungsmittelfrei und so gewählt, dass ein Aushärten der Beschichtung durch UV-Strahlung mittels einer Quecksilberdampflampe erfolgen kann. Weitere Energie wird nicht zugeführt.

Hierdurch wird in vorteilhafter Weise erreicht, dass ein Abdunsten von Lösungsmittel nicht stattfindet, was umwelttechnische Vorteile bei der Produktion hat. Insbesondere sind spezielle Sicherheitsvorkehrungen nicht erforderlich.

Bei dem Beschichtungsmaterial auf Acrylatbasis handelt es sich um ein solches Material, dessen funktionelle Gruppen eine Aushärtung mittels optischer Strahlung bewirken. Aber auch andere funktionelle Gruppen können zum Einsatz kommen, nämlich solche, die Monomere unter Bildung eines Polymers verknüpfen, mit der daraus folgenden Aushärtung des Substrats beim Zuführen optischer Strahlung.

Ein Vorteil der Aushärtung des Substrats mittels UV-Strahlung ist, dass in diesem Energiebereich entsprechende chemische Verbindungen zu einer genügend harten Beschichtung führen und somit eine harte Oberfläche auf der Belagfeder hergestellt werden kann.

Die Dicke der Beschichtung nimmt unter anderem auf die Qualität der Beschichtung Einfluss, beispielsweise hinsichtlich der Härte und der Lebensdauer, und ist somit entsprechend gewählt.

### Bezugszeichenliste

- 1: Kupplungsscheibe
- 2: Reibbelag
- 3: Reibbelag
- 4: Seite der Belagfeder
- 5: Seite der Belagfeder
- 6: Belagfeder
- 7: Drehachse
- 8: Niet
- 9: erste beschichtete Fläche
- 10: zweite beschichtete Fläche

## Patentansprüche

1. Verfahren zur Herstellung der Kupplungsscheibe (1) einer Kupplungseinrichtung, insbesondere einer Kraftfahrzeugkupplungseinrichtung, die mindestens einen Reibbelag (2, 3) aufweist, der auf einer der Seiten (4, 5) einer Belagfeder (6) festgelegt ist,
**dadurch gekennzeichnet,**
**dass** zumindest ein Teil der dem Reibbelag (2, 3) zugewandten Seite (4, 5) der Belagfeder (6) und/oder zumindest ein Teil der der Belagfeder (6) zugewandten Seite des Reibbelags (2, 3) vor der Verbindung der Belagfeder (6) mit dem Reibbelag (2, 3) mit einer Oberflächenbeschichtung versehen wird, die durch eine Erhöhung des Reibwertes zwischen Belagfeder und Reibbelag ein festes Anliegen sicher stellt.

2. Verfahren nach Anspruch 1, **dadurch gekennzeichnet, dass** lediglich die Kontaktfläche zwischen Reibbelag (2, 3) und Belagfeder (6) der Oberflächenbeschichtung unterzogen wird.

3. Verfahren nach Anspruch 1 oder 2, **dadurch gekennzeichnet, dass** die Oberflächenbeschichtung eine Lackbeschichtung ist.

4. Verfahren nach einem der Ansprüche 1 bis 3, **dadurch gekennzeichnet, dass** zur Aushärtung der auf die Belagfeder (6) und/oder auf den Reibbelag (2, 3) aufgebrachten Oberflächenschicht diese mit einer Strahlungsquelle bestrahlt wird.

5. Verfahren nach Anspruch 4, **dadurch gekennzeichnet, dass** die Bestrahlung mit einer Lichtquelle erfolgt.

6. Verfahren nach Anspruch 5, **dadurch gekennzeichnet, dass** die Bestrahlung mit einer UV-Lichtquelle erfolgt.

7. Verfahren nach Anspruch 6, **dadurch gekennzeichnet, dass** die Bestrahlung mit einer Quecksilberdampflampe erfolgt.

8. Verfahren nach einem der Ansprüche 1 bis 7, **dadurch gekennzeichnet, dass** das Material der Oberflächenschicht in flüssigem, in gelartigem oder in festem Zustand, insbesondere in pulverförmigem Zustand, auf die zu beschichtenden Teile aufgebracht wird.

9. Verfahren nach Anspruch 8, **dadurch gekennzeichnet, dass** das Aufbringen des Materials der Oberflächenschicht auf die zu beschichtenden Teile durch ein Walzverfahren, durch ein Tauchverfahren oder durch ein Spritzverfahren erfolgt.

10. Kupplungsscheibe (1) für eine Kupplungseinrichtung, insbesondere eine Kraftfahrzeugkupplungseinrichtung, die mindestens einen Reibbelag (2, 3) aufweist, der auf einer der Seiten (4, 5) einer Belagfeder (6) festgelegt ist,
**dadurch gekennzeichnet,**
**dass** zumindest ein Teil der dem Reibbelag (2, 3) zugewandten Seite (4, 5) der Belagfeder (6) und/oder zumindest ein Teil der der Belagfeder (6) zugewandten Seite des Reibbelags (2, 3) eine Oberflächenbeschichtung aufweist, die durch eine Erhöhung des Reibwertes zwischen Belagfeder und Reibbelag ein festes Anliegen sicher stellt.

11. Kupplungsscheibe nach Anspruch 10, **dadurch gekennzeichnet, dass** lediglich die Kontaktfläche zwischen Reibbelag (2, 3) und Belagfeder (6) mit der Oberflächenbeschichtung versehen ist.

12. Kupplungsscheibe nach Anspruch 10 oder 11, **dadurch gekennzeichnet, dass** die Oberflächenbeschichtung eine Lackbeschichtung ist.

13. Kupplungsscheibe nach einem der Ansprüche 10 bis 12, **dadurch gekennzeichnet, dass** das Material der Oberflächenschicht ein optisch aushärtbares Substrat ist.

14. Kupplungsscheibe nach einem der Ansprüche 10 bis 13, **dadurch gekennzeichnet, dass** das Material der Oberflächenschicht ein lösungsmittelfreies Substrat ist.

15. Kupplungsscheibe nach einem der Ansprüche 10 bis 14, **dadurch gekennzeichnet, dass** das Material der Oberflächenschicht vor seinem Auftrag flüssig, gelartig oder fest, insbesondere pulverförmig, ist.

16. Kupplungsscheibe nach einem der Ansprüche 10 bis 15, **dadurch gekennzeichnet, dass** die Basis des Materials der Oberflächenschicht Acrylat ist.

17. Kupplungsscheibe nach einem der Ansprüche 10 bis 16, **dadurch gekennzeichnet, dass** das Grundmaterial der Oberflächenschicht mindestens einen weiteren Bestandteil aufweist.

18. Kupplungsscheibe nach Anspruch 17, **dadurch gekennzeichnet, dass** der mindestens eine weitere Bestandteil ein anorganisches Polymer oder ein organisches Polymer oder eine Mischung aus diesen ist.

19. Kupplungsscheibe nach Anspruch 18, **dadurch gekennzeichnet, dass** der mindestens eine weitere Bestandteil ein Gummi oder ein Elastomer ist.

20. Kupplungsscheibe nach Anspruch 18, **dadurch gekennzeichnet, dass** der mindestens eine weitere Bestandteil ein abrasives Material ist, vorzugsweise Quarz, Kieselgel, Keramik oder eine Mischung aus mindestens zwei der genannten Komponenten.

21. Kupplungsscheibe nach Anspruch 10, **dadurch gekennzeichnet, dass** die Oberflächenbeschichtung an den Stellen vorgesehen ist, die im späteren Betrieb der Kupplungsvorrichtung im festen Kontakt stehen und für die keine Relativbewegung vorgesehen ist.

22. Verfahren nach Anspruch 1, **dadurch gekennzeichnet, dass** die Oberflächenbeschichtung an den Stellen vorgesehen ist, die im späteren Betrieb der Kupplungsvorrichtung im festen Kontakt stehen und für die keine Relativbewegung vorgesehen ist.

## Claims

1. Method for manufacturing the clutch plate (1) of a clutch device, in particular a motor-vehicle clutch device, which has at least one friction lining (2, 3) which is fixed on one of the sides (4, 5) of a lining spring (6), **characterized in that** at least one part of that side (4, 5) of the lining spring (6) which faces the friction lining (2, 3) and/or at least one part of that side of the friction lining (2, 3) which faces the lining spring (6) are/is provided with a surface coating before the connection of the lining spring (6) to the friction lining (2, 3), the surface coating ensuring a firm contact between the lining spring and the friction lining with an increase in the coefficient of friction.

2. Method according to Claim 1, **characterized in that** only the contact face between the friction lining (2, 3) and the lining spring (6) is subjected to the surface coating.

3. Method according to Claim 1 or 2, **characterized in that** the surface coating is a paint coating.

4. Method according to one of Claims 1 to 3, **characterized in that**, in order to cure the surface layer which has been applied to the lining spring (6) and/or to the friction lining (2, 3), the said surface layer is irradiated with a radiation source.

5. Method according to Claim 4, **characterized in that** the irradiation takes place with a light source.

6. Method according to Claim 5, **characterized in that** the irradiation takes place with a UV light source.

7. Method according to Claim 6, **characterized in that** the irradiation takes place with a mercury vapour lamp.

8. Method according to one of Claims 1 to 7, **characterized in that** the material of the surface layer is applied to the parts which are to be coated in a liquid state, in a gel-like state or in a solid state, in particular in a powdered state.

9. Method according to Claim 8, **characterized in that** the material of the surface layer is applied to the parts which are to be coated by a rolling process, by a dipping process or by a spraying process.

10. Clutch plate (1) for a clutch device, in particular a motor-vehicle clutch device, which has at least one friction lining (2, 3) which is fixed on one of the sides (4, 5) of a lining spring (6), **characterized in that** at least one part of that side (4, 5) of the lining spring (6) which faces the friction lining (2, 3) and/or at least one part of that side of the friction lining (2, 3) which faces the lining spring (6) have/has a surface coating, the surface coating ensuring a firm contact between the lining spring and the friction lining with an increase in the coefficient of friction.

11. Clutch plate according to Claim 10, **characterized in that** only the contact face between the friction lining (2, 3) and the lining spring (6) is provided with the surface coating.

12. Clutch plate according to Claim 10 or 11, **characterized in that** the surface coating is a paint coating.

13. Clutch plate according to one of Claims 10 to 12, **characterized in that** the material of the surface layer is an optically curable substrate.

14. Clutch plate according to one of Claims 10 to 13, **characterized in that** the material of the surface layer is a solvent-free substrate.

15. Clutch plate according to one of Claims 10 to 14, **characterized in that** the material of the surface layer is liquid, gel-like or solid, in particular powdered, before its application.

16. Clutch plate according to one of Claims 10 to 15, **characterized in that** the basis of the material of the surface layer is acrylate.

17. Clutch plate according to one of Claims 10 to 16, **characterized in that** the basic material of the surface layer has at least one further constituent part.

18. Clutch plate according to Claim 17, **characterized in that** the at least one further constituent part is an inorganic polymer or an organic polymer or a mixture of them.

19. Clutch plate according to Claim 18, **characterized in that** the at least one further constituent part is a rubber or an elastomer.

20. Clutch plate according to Claim 18, **characterized in that** the at least one further constituent part is an abrasive material, preferably quartz, silica gel, ceramic or a mixture of at least two of the abovementioned components.

21. Clutch plate according to Claim 10, **characterized in that** the surface coating is provided at locations which are in firm contact during subsequent operation of the clutch apparatus and for which no relative movement is provided.

22. Method according to Claim 1, **characterized in that** the surface coating is provided at locations which are in firm contact during subsequent operation of the clutch apparatus and for which no relative movement is provided.

## Revendications

1. Procédé de fabrication du disque d'embrayage (1) d'un dispositif d'embrayage, en particulier d'un dispositif d'embrayage pour un véhicule automobile qui présente au moins une garniture de friction (2, 3) qui est fixée sur l'un des côtés (4, 5) d'un ressort de garniture (6),
**caractérisé en ce que**,
au moins une partie du côté (4, 5) du ressort de garniture (6) tourné vers la garniture de friction (2, 3) et/ou au moins une partie du côté de la garniture de friction (2, 3) tourné vers le ressort de garniture (6) sont pourvues, avant la connexion du ressort de garniture (6) à la garniture de friction (2, 3), d'un revêtement de surface qui assure une application solide par augmentation du coefficient de friction entre le ressort de garniture et la garniture de friction.

2. Procédé selon la revendication 1, **caractérisé en ce que**, seule la surface de contact entre la garniture de friction (2, 3) et le ressort de garniture (6) est soumise au revêtement de surface.

3. Procédé selon la revendication 1 ou 2, **caractérisé en ce que**, le revêtement de surface est un revêtement de vernis.

4. Procédé selon l'une quelconque des revendications 1 à 3, **caractérisé en ce que**, pour le durcissement de la couche superficielle appliquée sur le ressort de garniture (6) et/ou sur la garniture de friction (2, 3), celle-ci est soumise à un rayonnement provenant d'une source de rayonnement.

5. Procédé selon la revendication 4, **caractérisé en ce que**, l'application du rayonnement s'effectue au moyen d'une source de lumière.

6. Procédé selon la revendication 5, **caractérisé en ce que**, l'application du rayonnement s'effectue au moyen d'une source de lumière UV.

7. Procédé selon la revendication 6, **caractérisé en ce que**, l'application du rayonnement s'effectue au moyen d'une lampe à vapeur de mercure.

8. Procédé selon l'une quelconque des revendications 1 à 7, **caractérisé en ce que** le matériau de la couche superficielle est appliqué à l'état fluide, à l'état de gel ou à l'état solide, notamment à l'état pulvérulent, sur les pièces à revêtir.

9. Procédé selon la revendication 8, **caractérisé en ce que** l'application du matériau de la couche superficielle sur les pièces à revêtir s'effectue par un procédé de laminage, par un procédé de trempage ou par un procédé de pulvérisation.

10. Disque d'embrayage (1) pour un dispositif d'embrayage, notamment un dispositif d'embrayage de véhicule automobile, lequel présente au moins une garniture de friction (2, 3) qui est fixée sur l'un des côtés (4, 5) d'un ressort de garniture (6,),
**caractérisé en ce que**,
au moins une partie du côté (4, 5) du ressort de garniture (6) tourné vers la garniture de friction (2, 3) et/ou au moins une partie du côté de la garniture de friction (2, 3) tourné vers le ressort de garniture (6) présentent un revêtement de surface qui assure une application solide par augmentation du coefficient de friction entre le ressort de garniture et la garniture de friction.

11. Disque d'embrayage selon la revendication 10, **caractérisé en ce que** seule la surface de contact entre la garniture de friction (2, 3) et le ressort de garniture (6) est soumise au revêtement de surface.

12. Disque d'embrayage selon la revendication 10 ou 11, **caractérisé en ce que** le revêtement de surface est un revêtement de vernis.

13. Disque d'embrayage selon la revendication 10 à 12, **caractérisé en ce que** le matériau de la couche superficielle est un substrat pouvant être durci par voie optique.

14. Disque d'embrayage selon l'une quelconque des revendications 10 à 13, **caractérisé en ce que** le matériau de la couche superficielle est un substrat exempt de solvant.

15. Disque d'embrayage selon l'une quelconque des revendications 10 à 14, **caractérisé en ce que** le matériau de la couche superficielle avant son application se présente sous forme liquide, sous forme de gel ou sous forme solide, notamment sous forme pulvérulente.

16. Disque d'embrayage selon l'une quelconque des revendications 10 à 15, **caractérisé en ce que** la base du matériau de la couche superficielle est de l'acrylate.

17. Disque d'embrayage selon l'une quelconque des revendications 10 à 16, **caractérisé en ce que** le matériau de base de la couche superficielle présente au moins un autre constituant.

18. Disque d'embrayage selon la revendication 17, **caractérisé en ce que** l'au moins un autre constituant est un polymère inorganique ou un polymère organique ou un mélange de ces composants.

19. Disque d'embrayage selon la revendication 18, **caractérisé en ce que** l'au moins un autre constituant est un caoutchouc ou un élastomère.

20. Disque d'embrayage selon la revendication 18, **caractérisé en ce que** l'au moins un autre constituant est un matériau abrasif, de préférence du quartz, un gel de silice, de la céramique ou un mélange d'au moins deux desdits composants.

21. Disque d'embrayage selon la revendication 10, **caractérisé en ce que** le revêtement superficiel est prévu aux endroits qui sont en contact fixe pendant le fonctionnement ultérieur du dispositif d'embrayage et pour lesquels aucun mouvement relatif n'est prévu.

22. Procédé selon la revendication 1, **caractérisé en ce que** le revêtement superficiel est prévu aux endroits qui sont en contact fixe pendant le fonctionnement ultérieur du dispositif d'embrayage et pour lesquels aucun mouvement relatif n'est prévu.
